# EUROPEAN PATENT APPLICATION

(11) **EP 2 287 719 A2**
(43) Date of publication of application: **23.02.2011**
(21) Application number: 10170464.1
(22) Date of filing: 22.07.2010
(51) Int. Cl.: G06F 3/12

(54) **Information processing apparatus, workflow system, workflow management method, and storage medium of program for workflow management method**

(30) Priority: 24.07.2009 JP 2009173070
(71) Applicant: Ricoh Company, Ltd., Tokyo 143-8555 (JP)
(72) Inventor: Masuda, Masaya, Tokyo 143-8555 (JP)
(74) Representative: Schwabe - Sandmair - Marx

(57) **Abstract**

An information processing apparatus, implementing data processes via network, includes a remote environment file obtaining unit, a plug-in environment file generating unit, a difference file generating unit, a determining unit, and a plug-in setting file generating unit. The remote environment file obtaining unit receives an updating notice of workflow definition for the data processing, and obtains a remote environment file storing a plug-in program retained by an operation node. The plug-in environment file generating unit generates a plug-in environment file including a plug-in identification of a to-be-updated plug-in program. The difference file generating unit generates a difference file between the remote environment file and the plug-in environment file. The determining unit determines whether to set an install/uninstall process, or an operation attribution value for the plug-in program for the operation node. The plug-in setting file generating unit generates a plug-in setting file including an install path of the plug-in program.

## Description

### CROSS-REFERENCE TO RELATED APPLICATIONS

This application claims priority to Japanese Patent Application No. 2009-173070, filed on July 24, 2009 in the Japan Patent Office, which is hereby incorporated by reference herein in its entirety.

### BACKGROUND OF THE INVENTION

### Field of the Invention

The present invention relates to a workflow technology used with a network, and more particularly to an information processing apparatus, a workflow system, a workflow management method, and a storage medium storing a workflow management program, which are used to update workflow resources on a network.

### Description of the Background Art

Image processing apparatuses such as printers, remote facsimile machines, remote scanners, and the like have been used in offices or the like by connecting apparatuses via a network. Further, personal computers and servers have been also used in offices or the like so that computers and image processing apparatuses may be linked with each other to conduct various types of processing via the network. Such image processing apparatuses may be configured with hardware and middleware as the primary resources for information processing, including image processing. With advances in the capabilities of information processing devices, such as more powerful and more versatile microprocessors and increasing usage of memory devices such as random access memory (RAM), hard disk drive (HDD), and the like, enhancement of processing performance of image processing apparatuses has been observed.

Such image processing apparatuses can be devised to execute object-oriented programming languages such as Java (registered trademark), Ruby, Perl, and JavaScript (registered trademark) under the control of an enhanced operating system (hereinafter, "OS") so that the image processing apparatuses can conduct various types of processing using structured documents such as hypertext marked-up language (HTML), extended marked-up language (XML), or the like in addition to image processing.

In such network environment, each image processing apparatus may be used as a network node, similar to personal computers on the network except for hardware functions and user interface. When the image processing apparatus is recognized as one network node having different hardware functions, such network node can be made to function in line with a process sequence set for the network node via the network, by which distributed data processing can be conducted.

Generally, each image processing apparatus may use its hardware functions sparingly, meaning that the image processing apparatus may remain in a standby mode for a relatively longer time between given processes (e.g., image forming) compared to a personal computer. In view of such limited usage of the hardware functions of image processing apparatus, it is possible to use these hardware and/or software resources to support information processing task at the information processing apparatus such as the personal computer.

In the above-described network environment system, a process sequence applied to specific data may be modified user-by-user (or by user group). When the process sequence is modified, processes to be implemented by network nodes such as image processing apparatuses may be changed. When processes to be implemented by the specific network node needs to be modified in response to modification of the process sequence, such specific network node may need to use a specific application for such modified process. However, such specific network node may not always have the specific application that can conduct the modified process. In such a case, for example, in JP-2007-281782-A, a plug-in program can be added to an image forming apparatus to provide an additional software function to the image forming apparatus.

As such, JP-2007-281782-A discloses a technology to expand the software functions of the image processing apparatus by transmitting plug-in programs to the image processing apparatus. However, the image processing apparatus is required to process image information in view of its intended purpose. Accordingly, if an additional software function is to be added to the image processing apparatus, the image processing apparatus may need a given size of storage area, which may be beyond a normal storage size (or minimal storage size) set for image processing.

Further, a uniform environment for hardware and software across entire network nodes may be preferable in appearance. However, each network node has a different storage capacity, and thereby a uniform environment may be a waste of hardware and software resources. Further, unlimited expansion of software functions for network nodes in response to modifications of process sequence is not justified.

Accordingly, as for distributed data processing using network nodes, it is required to cope with changes of process sequence in a flexible manner. Further, when coping with changes of process sequence in a flexible manner, a technology that can use hardware and software resources effectively is required.

Further, when settings of workflow definition are updated in a flexible manner, a technology that can reduce hardware and software resources used for implementing workflows is required.

### SUMMARY

In one aspect of the present invention, an information processing apparatus, connected to a network, that implements a plurality of data processes consecutively, is devised. The information processing apparatus includes a remote environment file obtaining unit, a plug-in environment file generating unit, difference file generating unit, a determining unit, and a plug-in setting file generating unit. The remote environment file obtaining unit receives an updating notice of workflow definition used for implementing the plurality of data processes consecutively via the network, and obtains a remote environment file storing a plug-in program retained by an operation node in the network, which is a to-be-updated node. The plug-in environment file generating unit generates a plug-in environment file including a plug-in identification value of a plug-in program to be updated. The plug-in environment file is retained by the information processing apparatus. The difference file generating unit generates a difference file including different information between the remote environment file and the plug-in environment file. The determining unit reads the difference file to determine whether to set an install process, an uninstall process, or an operation attribution value for the plug-in program for the operation node. The plug-in setting file generating unit generates a plug-in setting file including an install path of the plug-in program to install the plug-in program if the determining unit determines to install the plug-in program.

In another aspect of the present invention, a workflow system to implement a plurality of data processes consecutively via a network is devised. The workflow system includes an operation node to implement the plurality of data processes consecutively, and a utility node to update a process to be implemented by the operation node. The utility node includes a remote environment file obtaining unit, a plug-in environment file generating unit, difference file generating unit, a determining unit, and a plug-in setting file generating unit. The remote environment file obtaining unit receives an updating notice of workflow definition used for implementing the plurality of data processes consecutively via the network, and obtains a remote environment file storing a plug-in program retained by an operation node in the network, which is a to-be-updated node. The plug-in environment file generating unit generates a plug-in environment file including a plug-in identification value of a plug-in program to be updated. The plug-in environment file is retained by the information processing apparatus. The difference file generating unit generates a difference file including different information between the remote environment file and the plug-in environment file. The determining unit reads the difference file to determine whether to set an install process, an uninstall process, or an operation attribution value for the plug-in program for the operation node. The plug-in setting file generating unit generates a plug-in setting file including an install path of the plug-in program to install the plug-in program if the determining unit determines to install the plug-in program.

In still another aspect of the present invention, a workflow management method for a workflow system, including an operation node and a utility node connected with each other via a network, is devised. The operation node is capable of implementing a plurality of data processes consecutively. The utility node is capable of updating processing at the operation node and implementing the workflow management method. The workflow management method includes the steps of receiving an updating notice of workflow definition used for implementing the plurality of data processes consecutively via a network; obtaining a remote environment file storing a plug-in program retained by an operation node which is a to-be-updated node; generating a plug-in environment file including a plug-in identification value of a plug-in program that needs to be updated, which is retained by the information processing apparatus; generating a difference file including different information between the remote environment file and the plug-in environment file; determining whether to set an install process, an uninstall process, or an operation attribution value for the plug-in program for the operation node based on reading of the difference file; and generating a plug-in setting file including an install path of the plug-in program that needs to be set if the determining step determines to install the plug-in program.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 illustrates an example configuration of a workflow system according to a first example embodiment;
FIG. 2 illustrates an example functional block of a network node according to the first example embodiment;
FIG. 3 illustrates an example data flow among network nodes in the workflow system according to the first example embodiment;
FIG. 4 illustrates a flowchart of processes implementable by a utility node according to the first example embodiment;
FIGs. 5A, 5B, and 5C illustrate an example of plug-in environment file, a remote environment file, and a difference file, respectively, according to the first example embodiment;
FIG. 6 illustrates an example of a plug-in setting file according to the first example embodiment;
FIG. 7 illustrates an example data flow for a plug-in updating process in the workflow system according to the first example embodiment; and
FIG. 8 illustrates an example configuration of a workflow system according to a second example embodiment.

### DETAILED DESCRIPTION OF EXEMPLARY EMBODIMENTS

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner. Referring now to the drawings, a workflow system according to example embodiment is described hereinafter.

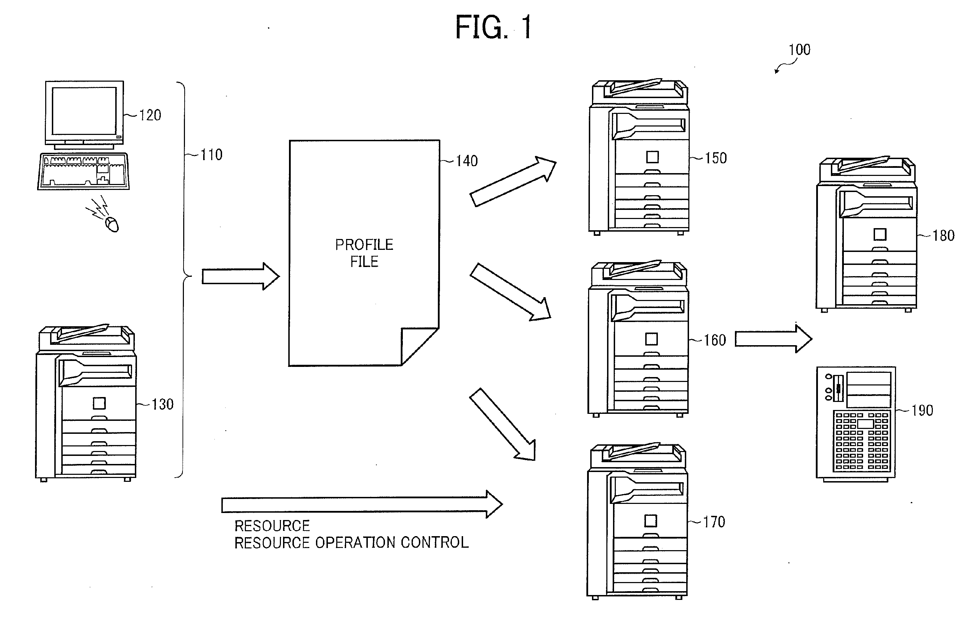

FIG. 1 illustrates a workflow system 100 according to a first example embodiment. The workflow system 100 may include information processing apparatuses such as a personal computer, a workstation, a server, and an image processing apparatus, which may be connectable with each other via a network. Hereinafter, information processing apparatuses connectable to the network and conducting any part of processes included in a workflow may be referred to as a network node. The network nodes may include utility node(s) and operation node(s), wherein the operation node may have no utility node function, in general.

The utility node may be used to set a workflow definition and have a function of managing processing at the network node in the workflow system 100. The utility node may obtain a workflow definition via a network such as the internet, intranet, or the like, and conduct version change of workflow, addition of workflow definition, or the like. Further, when a workflow definition of given workflow is to be changed and a plug-in program included in the given workflow becomes unnecessary, the utility node issues an uninstall instruction for the plug-in program to the operation node by designating a plug-in identification value (hereinafter, plug-in ID) of such plug-in program determined as "unnecessary plug-in program." As such, the utility node may be used or made to function as a determining unit.

The operation nodes 150, 160, and/or 170 receive a workflow definition from the utility node 110, install a plug-in program required for a given process, and implement jobs to be conducted by the operation nodes 150, 160, and/or 170 using the received workflow definition. As such, the operation node may conduct jobs set for the operation node. As shown in FIG. 1, the utility node 110 in the workflow system 100 may be a computer 120 or an image processing apparatus 130 such as a copier, facsimile, multi-function peripheral (MFP), printer or a scanner, for example. The computer 120 may be an information processing apparatus such as a personal computer, a workstation, or a server, which can execute general purpose applications. Such information processing apparatus may or may not have functions designed for image processing.

The image processing apparatus 130 may have a function of processing images. Further, the image processing apparatus 130 may be used as a multi-function peripheral (MFP), which is an upgraded apparatus in the market. Such image processing apparatus 130 may use Java (registered trademark) programming language and run browser programs, have a file transfer function, a mail function, and a permanent storage function, and may use structured document parser for hypertext markedup language (HTML), extended markedup language (XML), or the like. Further, it may be preferable if each network node can be configured to share data via XML such as XML-ATOM, SOAP, or the like, for example.

Multiple or a plurality of or a number of (i.e. one, two, three or more, at least one, two or three, or more than one, two or three) utility nodes 110 may be disposed in the workflow system 100, but may not be required to do so. The utility node 110 may be required to be disposed for one node in relation to an operation node group which may conduct a part of processes in the workflow. If it is preferable to add functional redundancy (or functional separation) for a specific workflow system 100, a plurality of utility nodes 110 may be disposed in the workflow system 100. Further, if the utility node 110 is installed in the image processing apparatus 130, the utility node 110 may also function as an operation node, which is defined in a workflow definition.

The utility node 110 transmits a profile file 140 having a workflow definition to the operation nodes 150, 160, and/or 170 to cause the operation nodes 150, 160, and/or 170 to function as the operation nodes in the workflow. As such, the utility node may be used or made to function as a transmission unit to transmit a profile file to an operation node. In the first example embodiment, the profile file 140 may be prepared, for example, as a structured document such as XML. Further, the profile file 140 may have a layered structure, in which a plurality of different operation items, for example, image obtaining, mail transmission, file uploading, folder storage, which may be referred to as project.

For example, the profile file 140 may implement a plurality of processes such as for example an image obtaining process, a format conversion process, and a file upload process in this order by interpreting the layered structure of projects described in the profile file 140, by which the profile file 140 can implements its intended task processes included in one workflow.

In the first example embodiment, when the profile file 140 is configured by using XML, each project may be described as a node designated by XML tag such as for example <Project>, </Project>, or the like, and control data to be used in each project may be described using data tag disposed between <Project> and </Project> tags, wherein the control data is used for controlling various processes.

Further, the utility node 110 manages each of the operation nodes 150, 160, and/or 170 so that the operation nodes 150, 160, and/or 170 can be set with a given plug-in program environment, which may be enough for implementing functions designated by the profile file 140 to be transmitted to the operation nodes 150, 160, and 170.

The operation nodes 150, 160, and 170 may separately implement a workflow defined by the profile file 140, and may upload obtained data to an image processing apparatus (such as a copier, facsimile, multi-function peripheral (MFP), printer or scanner, etc.) 180 or a server 190, which may function as a file server, for example. The operation nodes 150, 160, and/or 170 may use a file sharing function and a mail server for implementing functions such as folder storage, mail transmission, and file upload, for example. For example, the operation nodes 150, 160, and/or 170 may implement a mail transfer function using simple mail transfer protocol (SMTP) or the like, and a file transfer function using a protocol such as file transfer protocol (FTP), hypertext transfer protocol (HTTP) or the like, which may be selected depending on required security levels.

Computers and image processing apparatuses used as the network node and utility node may have a similar hardware configuration, which may use a microprocessor having a complex instruction set computer (CISC) architecture such as Pentium (registered trademark), Xeon (registered trademark), Pentium (registered trademark)-compatible semiconductor chip or a microprocessor having a reduced instruction set computer (RISC) architecture such as PowerPC (registered trademark).
The microprocessor may be installed in a single-core or a multi-core configuration.

Further, each node may be controlled by an operating system (OS) such as Windows (registered trademark) 200X, UNIX (registered trademark), or Linux (registered trademark), for example. Each node may implement an application program installed by using programming languages such as C, C++, Java (registered trademark), JavaScript (registered trademark), PERL, RUBY, or the like. Each node may function as a unit such as an information processing apparatus and/or image processing apparatus in the workflow system 100, for example. Each node may be installed with browser software such as Internet Explorer (registered trademark), Mozilla (registered trademark), Opera (registered trademark), Firefox (registered trademark), or the like, depending on the processes to be implemented.

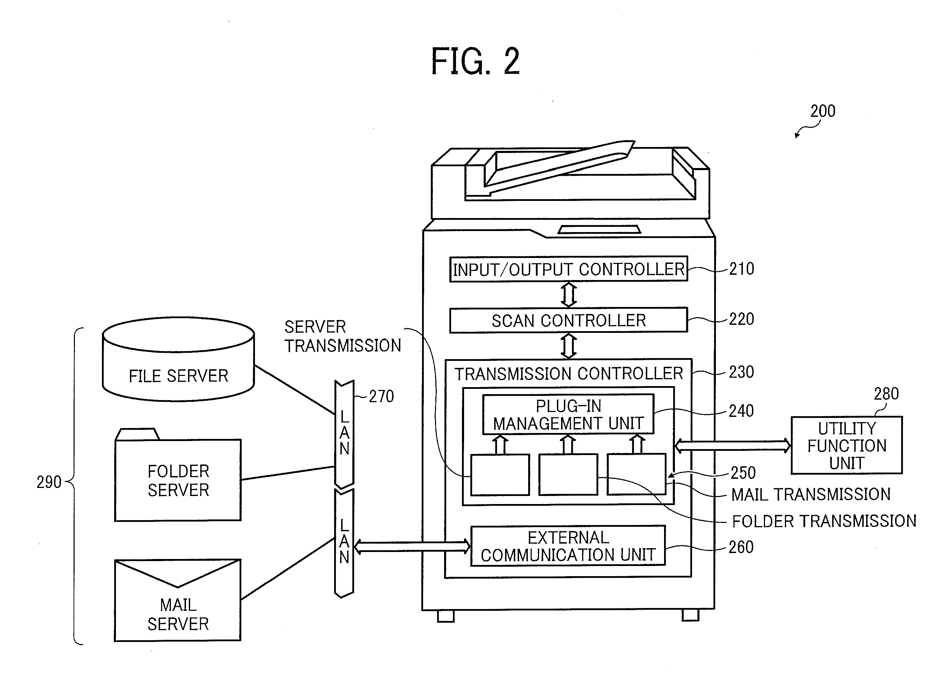

FIG. 2 illustrates an example functional block of a network node 200 according to the first example embodiment. As shown in FIG. 2, the network node 200 may include an input/output controller 210, a scan controller 220 used for scanning image, and a transmission controller 230, for example. The input/output controller 210 may control an operation panel if the network node is configured with the operation panel. Further, if the network node is installed with a browser program, a key input operation can be conducted using the operation panel, and the network node can display a control window providable by the browser program using a video monitor provided for the network node, for example.

The scan controller 220 may transmit an instruction to a scanner engine used for a scanner/sorter of network node to control an image processing function so that the network node can obtain image data and/or text data.

The transmission controller 230 may manage plug-in programs used for processing data obtained for the network node, wherein the processing is conducted using a workflow definition designated by the profile file 140, and the transmission controller 230 calls various types of plug-in programs based on the workflow definition to conduct various types of processing to data. Further, the network node may communicate with an external unit such as a function unit 290 via a local area network (LAN) 270 using the transmission controller 230. As shown in FIG. 2, the function unit 290 may be a file server, a folder server, or a mail server, for example, but not limited thereto.

The transmission controller 230 may include a plug-in management unit 240 and an external communication unit 260 to implement the above-described functions. The plug-in management unit 240 may implement an install/uninstall process to install or uninstall a plug-in program based on information included in an instruction transmitted from a utility function unit 280. Further, the plug-in management unit 240 may receive and obtain enablement/disablement information of plug-in program from the utility function unit 280, and manage implementation of project to be conducted based on the enablement/disablement information.

The external communication unit 260 transmits data, generated by sequentially implementing projects described in the profile file 140 using the network node, to an external unit, externally disposed for the network node, using a suitable protocol such as a file sharing protocol, a file upload protocol, or a mail transmission protocol, for example. The network node 200 may be useable as a utility node or an operation node. For example, if the network node 200 functions as a utility node, the utility function unit 280 shown in FIG. 2 may be included in the transmission controller 230 as a function unit, and if the network node 200 shown in FIG. 2 functions as an operation node, the network node 200 may be connected to a utility node via a network.

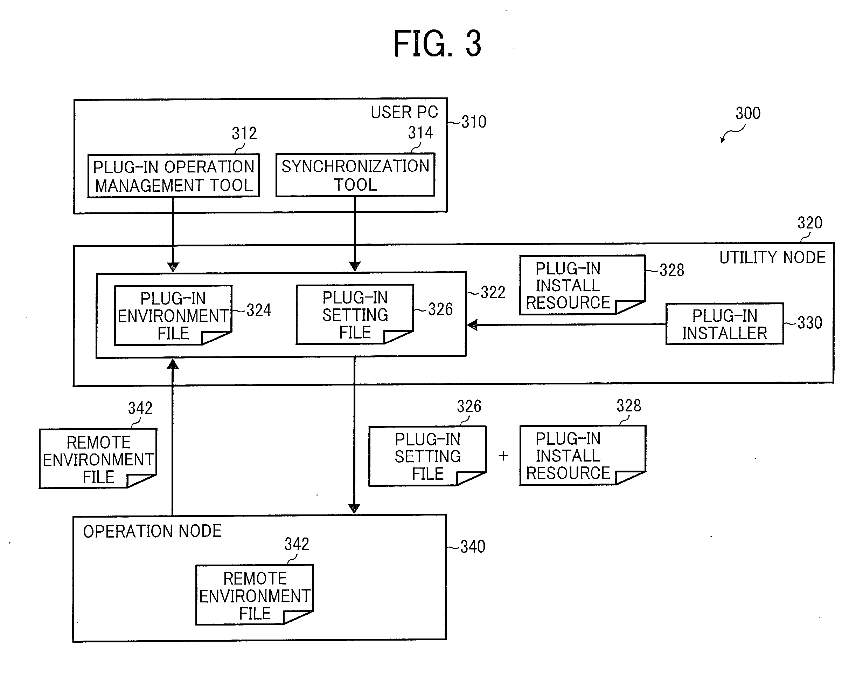

FIG. 3 illustrates an example data flow 300 among a plurality of network nodes disposed in the workflow system 100 according to the first example embodiment. In FIG. 3, the workflow system 100 may include a user personal computer (PC) 310, a utility node 320, and an operation node 340, in which the user PC 310 may be used to set various settings for workflow to be conducted at the utility node 320. The user PC 310 may be a personal computer, for example, used by an administrator of the workflow system 100. In the first example embodiment, the user PC 310 may include a plug-in operation management tool 312 and a synchronization tool 314, for example.

As for the user PC 310, the plug-in operation management tool 312 may be used to display a graphical user interface (GUI) on a desktop screen of the user PC 310. The plug-in operation management tool 312 may switch conditions of plug-in program already installed in the operation node 340. For example, plug-in programs may include plug-in programs, which provide main functions such as for example folder transmission function, file upload function, and mail transmission function, or the like. The plug-in operation management tool 312 can switch conditions of such main functions between an operable condition (also referred to as enabled condition) and an inoperable condition (also referred to as disabled condition). With such a configuration, starting of operation can be efficiently devised for plug-in program used for main functions.

The synchronization tool 314 may instruct the operation node 340 to synchronize a plug-in program retained by the utility node 320 and a plug-in program retained by the operation node 340, which necessary and sufficient for a given workflow definition. The above-mentioned main plug-in function may be excluded from such synchronization. When an administrator of the workflow system 100 changes a workflow definition, a profile file defining the concerned workflow definition is transmitted to a relevant node. Further, the user PC 310 activates the plug-in operation management tool 312 and the synchronization tool 314 to issue a plug-in environment updating notice to set a plug-in environment having necessary and sufficient condition to implement the workflow definition that should be updated. The plug-in environment updating notice may include a profile file, plug-in operation management information, and a synchronization instruction.

The utility node 320 may include a plug-in updating unit 322, which implements a plug-in updating process. When the utility node 320 receives the plug-in environment updating notice from the user PC 310, the utility node 320 obtains a remote environment file 342 from the operation node 340 to update a plug-in program with a synchronized manner. Then, the utility node 320 obtains its latest plug-in environment to prepare a plug-in environment file 324. As such, the utility node 320 may be used or made to function as as a remote environment file obtaining unit. Then, the utility node 320 compares the latest plug-in environment file and the remote environment file 342 to determine whether (1) there is a file that exists in the remote environment file 342 but does not exist in the plug-in environment file of the utility node 320; (2) there is a file that exists in the plug-in environment file of the utility node 320 but does not exist in the remote environment file 342; or (3) there is modification of operation setting of main plug-in program.

Further, when the plug-in updating unit 322 obtains each file from the operation node or transmits each file to the operation node, the plug-in updating unit 322 may use a protocol such as for example XML-ATOM or the like, by which the plug-in updating unit 322 can use a file transfer command such as GET, POST or the like as means for obtaining and means for transmission.

When it is determined that the above described condition (2) exists, a plug-in setting file 326 may be generated. For example, the plug-in setting file 326 is generated as an XML file listing an install path designated specifically for a plug-in program to be installed in an operation node. Further, a plug-in program corresponding to a profile file that should be updated may be transmitted to the utility node 320 from a resource server, connected externally, by which a plug-in install resource 328 including a plug-in installer 330 can be downloaded to the utility node 320 by the plug-in installer 330.

Then, the utility node 320 transmits the generated plug-in setting file 326 and the corresponding plug-in install resource 328 to the operation node 340.

Further, when it is determined that the above described condition (1) exists, an uninstall instruction is issued to the operation node 340 to uninstall an unnecessary plug-in program having a given plug-in ID. Further, when it is determined that the above described condition (3) exists, an updating instruction for updating operation setting of main plug-in program is issued. By issuing such updating instruction, the operation node is instructed to overwrite the operation attribution value of main plug-in program described with the XML file with the operation setting set by the updating instruction. Such operation attribution value can be designated, for example, as valid or invalid in the example embodiment.

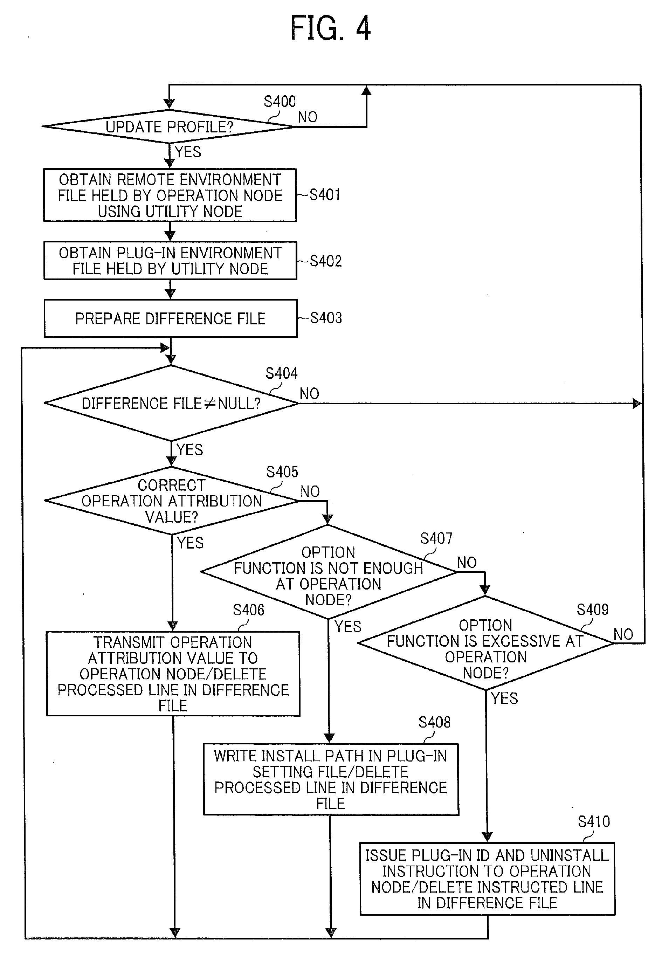

FIG. 4 illustrates a flowchart of steps implement-able by the plug-in updating unit 322 of the utility node 320 according to the first example embodiment. The process may start from step S400. At step S400, it is determined whether the plug-in updating unit 322 receives a profile updating notice from the synchronization tool 314. If the profile updating notice is not received (Step S400:NO), the process goes back to step S400, and then it is waited for receiving a profile updating notice. On one hand, if the profile updating notice is received (Step S400:Yes), the utility node 320 obtains a remote plug-in environment retained by an operation node as a remote environment file (step S401). Although the remote environment file can be prepared using various types of formats, a profile file presently retained by the operation node may be preferably transmitted as a remote environment file in view of synchronization efficiency.

At step S402, the plug-in environment retained by the utility node 320 is obtained from a latest profile file. For the sake of explanation, a latest profile file used for plug-in updating by the utility node 320 is referred to as a plug-in environment file.

At step S403, an XML editor is activated to compare the plug-in environment file and the remote environment file. Specifically, matching/non-matching of plug-in ID and matching/non-matching of operation attribution value are checked to prepare a difference file. The resultant difference file may include a plug-in ID of plug-in program that is determined as different plug-in program between the plug-in environment file and the remote environment file, a process attribution value indicating a given plug-in program is to be any one of "added" and "deleted (or not necessary)," and an operation attribution value that is determined as different between the plug-in environment file and the remote environment file. The difference file will be explained in detail later. As such, the XML editor may be used or made to function as a difference file generating unit.

At step S404, it is determined whether the prepared difference file is not null (i.e., difference file ≠ null?). If it is determined that the difference file is null (i.e., difference file = null) (step S404:NO), the process goes back to step S400, to await reception of an updating notice. If it is determined that the difference file is not null (i.e., difference file ≠ null) (step S404:Yes) and there is a difference of plug-in environment, the plug-in environment updating process (i.e., step S405 and subsequent steps) are implemented.

A description is now given of a plug-in updating process according to the first example embodiment. At step S405, a plug-in ID and process attribution value to be registered to the difference file is obtained, and it is determined whether the operation attribution value is to be corrected or changed. If it is determined that the operation attribution value needs to be corrected or changed (step S405:YES), the operation attribution value is transmitted to an operation node (step S406), and the corrected operation attribution value is set so that the corrected operation attribution value can be used after the plug-in environment updating process. Then, a currently processed line in the difference file is deleted, and the process is diverted to step S404.

If it is determined that the operation attribution value does not need a correction or change (step S405:No), the process goes to step S407. At step S407, it is determined whether an option function is not enough at the operation node. If it is determined that the option function is not enough (step S407:YES), an install path of plug-in ID, which is under processing and registered in the difference file, is extracted at step S408, and the install path is added to the plug-in setting file, and a currently processed line in the difference file is deleted, and the process is diverted to step S404.

Further, at step S409, it is determined whether the option function is excessive at the operation node. If it is determined that the option function is excessive (S409:YES), the process goes to step S410. At step S410, a concerned plug-in ID and an uninstall instruction is issued to the operation node, and an instruction line for instructing uninstall of plug-in program in the difference file is deleted, and the process is diverted to step S404. On one hand, if it is determined that the option function is not excessive for the operation node (S409:NO), the process goes back to step S400, to await a profile updating notice.

In another aspect of the first example embodiment, a plug-in program determined as excessive option function may not be uninstalled immediately from the operation nodes 150, 160, and/or 170. For example, based on instructions coming from the user PC 310, the operation attribution value of the plug-in program is changed to "invalid" and such plug-in program may be still stored in the operation nodes 150, 160, and/or 170 for a while until an explicit instruction is issued later.

With such configuration, the plug-in environment updating process for the utility node 110 and the operation nodes 150, 160, and/or 170 can be completed. Further, the plug-in environment updating process can be conducted for a plurality of the operation nodes 150, 160, and 170 at one time, or the plug-in environment updating process can be conducted for one specific operation node. For example, the plug-in environment updating process can be implemented for a specific operation node such as operation node 160. When the plug-in updating process is implemented for all of the operation nodes 150, 160, and 170 at one time, each updating instruction can be issued as multi-cast instruction. Further, when the plug-in updating process is implemented for each of the operation nodes 150, 160, and 170 one by one, each updating instruction can be issued as unicast instruction.

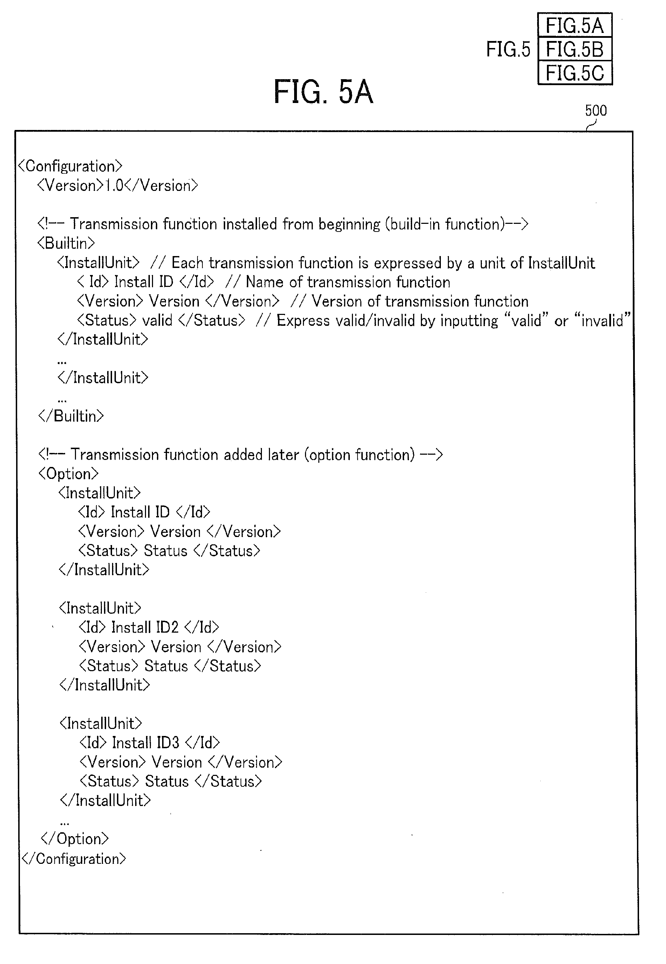

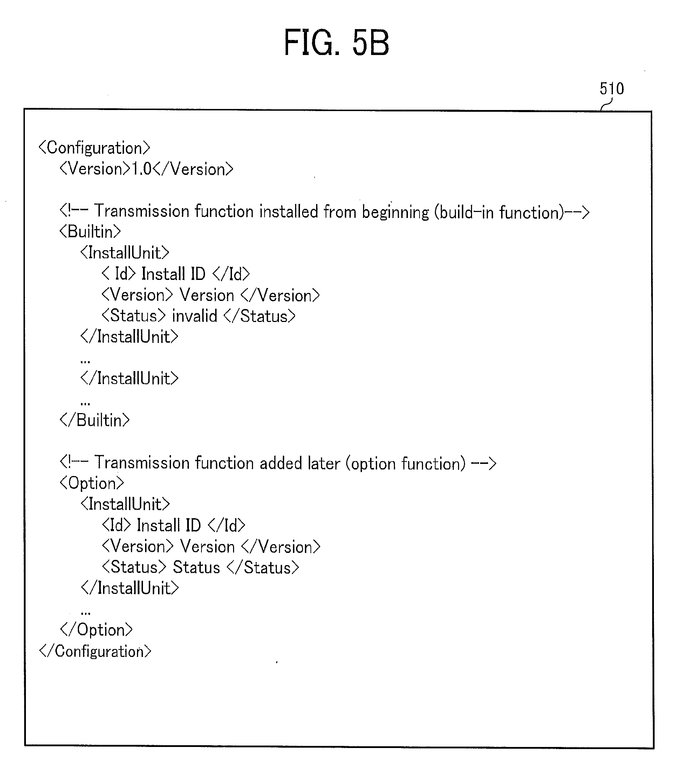

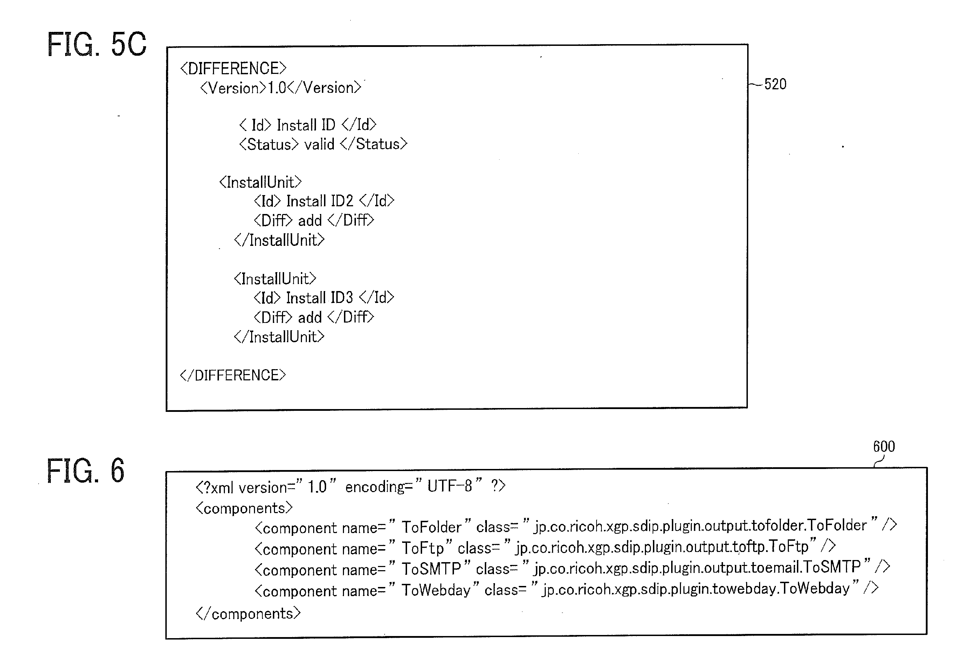

FIGs. 5A, 5B, and 5C illustrate an example of a plug-in environment file, a remote environment file, and a difference file, respectively, according to the first example embodiment. A plug-in environment file 500 may be a latest profile file used for updating a profile retained by the utility node 110 (see FIG. 1) currently. To secure data integrity, a latest profile file is copied and prepared as a plug-in environment file 500. Further, a remote environment file 510 corresponds to a profile file transmitted from the operation node 150, which should be implemented by the operation node 150 currently.

The difference file 520 may be an XML file prepared by an XML editor of the utility node 110 by comparing a profile environment file and a remote environment file. The difference file may include a line describing the operation attribution value, which is different between the profile environment file and remote environment file; a line describing the plug-in ID of plug-in program having different conditions between the profile environment file and remote environment file; and a line describing the difference attribution values between the profile environment file and remote environment file, for example. In the first example embodiment, a value of difference attribution may be described using tag<Diff>. The tag<Diff> indicates that conditions of one plug-in program are different between a profile environment file and a remote environment file. If such tag<Diff> information is included in the difference file 520, such one plug-in program has different conditions, by which such plug-in program receives a given process such as installing or uninstalling depending on the value of tag<Diff>. For example, the difference attribution value of <Diff>=add means that one item should be installed when an updating process is conducted. In the first example embodiment, an excessive plug-in program is not detected in the operation node. If an unnecessary plug-in program is included and detected in the operation node, the tag<Diff> for unnecessary plug-in program may be described with a difference attribution value of <Diff>=del, which means that such plug-in program needs to be deleted. Installation style of difference file and registration-required value can be set discretionally depending on purposes.

The utility node such as the utility node 110 may conduct the plug-in environment updating process as follows. The utility node 110 reads lines in the difference file starting from the first line of a difference file. The utility node 110 determines a process mode for the plug-in environment updating process, and implements given processing at each process mode. When such processing is completed, the utility node 110 deletes the line that is processed currently. When the difference file becomes null, the plug-in environment updating process ends.

FIG. 6 illustrates an example of plug-in setting file 600 according to the first example embodiment. The plug-in setting file 600 may be prepared as an XML file, for example. In the difference file 520, a plug-in program may be identified with the difference attribution value <Diff>=add, and such plug-in program may be registered with a path setting, wherein such path setting may be described in the plug-in setting file 600. The utility node 110 prepares the plug-in setting file 600 until the contents of difference file become null. After preparing the plug-in setting file 600, the plug-in setting file 600 is transmitted to the operation nodes 150, 160, and/or 170 with the plug-in install resource 328 that should be installed. The plug-in install resource 328 may be a typical installation package, which may include implementation file of plug-in program, resources including install

environment such as registry data. As such, the utility node 110 can be used or made to function as a plug-in setting file generating unit.

If a plug-in program that should be uninstalled exists in the operation node (such as operation nodes 150, 160, and/or 170), the operation node implements an uninstall process while receiving instructions sequentially until the checking of the difference file is completed, by which a plug-in updating process can be conducted efficiently.

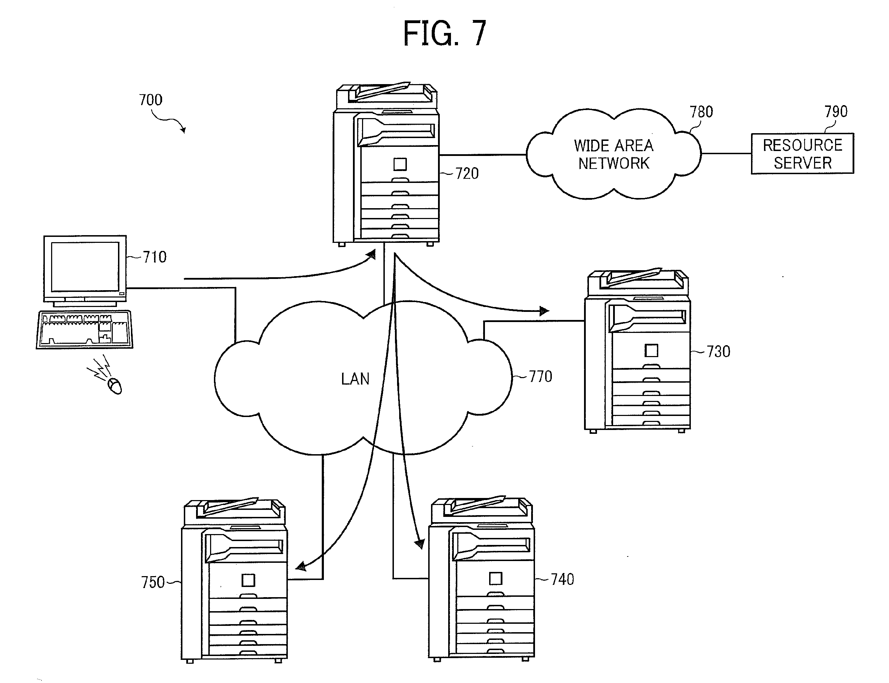

FIG. 7 illustrates an example data flow for plug-in updating process in a workflow system 700 according to the first example embodiment. In the workflow system 700 shown in FIG. 7, an image processing apparatus 720 can function as the utility node 110. Further, the image processing apparatus 720 may be connected to a user PC 710 including the plug-in operation management tool 312 and the synchronization tool 314. The plug-in operation management tool 312 and the synchronization tool 314 can be used to implement a plug-in updating process to the image processing apparatus 720.

The image processing apparatus 720 may function as the utility node 110 as below. The image processing apparatus 720 may download a plug-in resource from a resource server 790 via a wide area network 780 such as the internet or the like, and waits to receive a plug-in updating notice from the user PC 710. Upon receiving the plug-in updating notice from the user PC 710, the image processing apparatus 720 may generate a plug-in environment file, a remote environment file, and prepare a difference file. Then, the image processing apparatus 720 determines install/uninstall or change of operation environment, and implements a plug-in updating process shown in FIG. 4. As such, the image processing apparatus 720 may be used or made to function as a plug-in environment file generating unit.

Instructions and files generated by the plug-in updating process may be transmitted to operation nodes 730, 740, 750 via a LAN 770. Further, in FIG. 7, the image processing apparatus 720 may function as a utility node and an operation node. In the first example embodiment, after the image processing apparatus 720 completes functioning as the utility node, a profile file used as plug-in environment file may be set as workflow definition to be implemented, and then installing/uninstalling of plug-in program, and updating of operation environment setting may be implemented. After completing such process, the image processing apparatus 720 can also function as the operation nodes 150, 160, and/or 170 shown in FIG. 1.

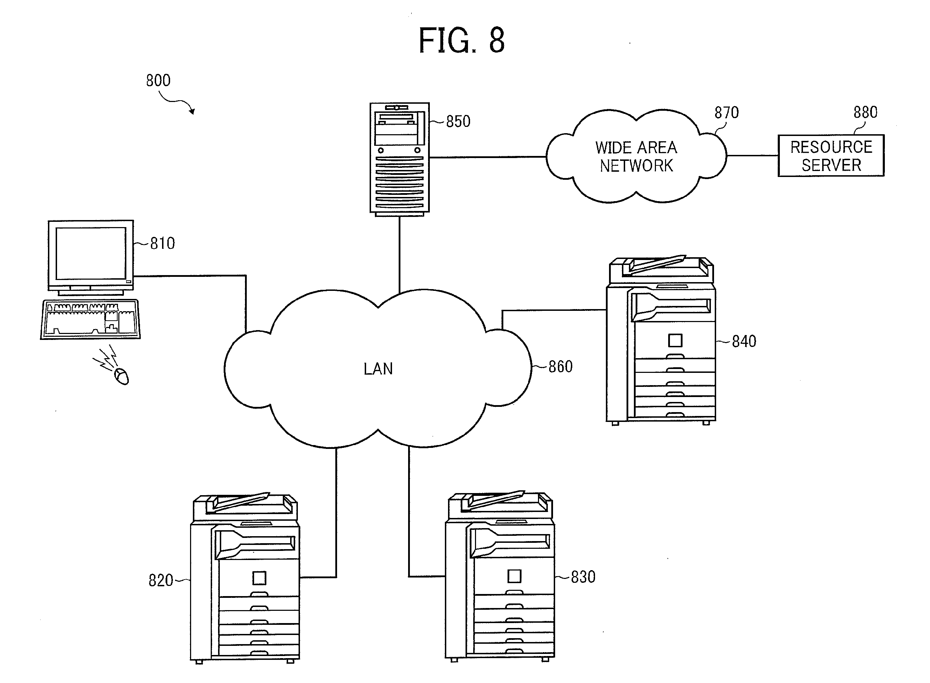

FIG. 8 illustrates an example configuration of a workflow system 800 according to a second example embodiment. In FIG. 8, the utility node 110 may be a personal computer, a workstation, or a server, which may be used as an independent unit, by which function of the utility node 110 is specifically provided. In a configuration of FIG. 8, an information processing apparatus specifically used as the utility node 110 may need to be added to the workflow system 800. Such configuration may be preferably employed when workflow definition become complex, or when the number of management-required image processing apparatuses 820 to 840 becomes large, because process overhead for plug-in updating process in such cases becomes heavy load. The image processing apparatus 720 used in the configuration of FIG. 7 may be not so proper for such heavy load computing.

In the above described example embodiments, the workflow system 100 can be selectively configured as the workflow system 700 of FIG. 7 or workflow system 800 of FIG. 8 depending on the number of image processing apparatuses connected to the workflow system 100 and/or complex level of workflow definition.

In the above described example embodiments, a workflow system to implement a plurality of data processes consecutively via a network is devised. The workflow system includes an operation node to implement the plurality of data processes consecutively, and a utility node to update a process to be implemented by the operation node. The utility node includes a remote environment file obtaining unit, a plug-in environment file generating unit, a difference file generating unit, a determining unit, and a plug-in setting file generating unit. The remote environment file obtaining unit receives an updating notice of workflow definition used for implementing the plurality of data processes consecutively via the network, and obtains a remote environment file storing a plug-in program retained by an operation node in the network, which is a to-be-updated node. The plug-in environment file generating unit generates a plug-in environment file including a plug-in identification value of a plug-in program to be updated. The plug-in environment file is retained by the information processing apparatus. The difference file generating unit generates a difference file including different information between the remote environment file and the plug-in environment file. The determining unit reads the difference file to determine whether to set an install process, an uninstall process, or an operation attribution value for the plug-in program for the operation node. The plug-in setting file generating unit generates a plug-in setting file including an install path of the plug-in program to install the plug-in program if the determining unit determines to install the plug-in program.

The above described workflow system further includes a transmitting unit to transmit the plug-in setting file and a resource related to the plug-in setting file to the operation node.

In the above described workflow system, the difference file includes a plug-in identification value, a difference attribution value, and an operation attribution value, the plug-in identification value designates a plug-in program having different conditions between the remote environment file and the plug-in environment file, the difference attribution value designates a differential condition of the plug-in program having the different conditions between the remote environment file and the plug-in environment file, and the operation attribution value designates one of an enabled condition and a disabled condition for the plug-in program having the different conditions between the remote environment file and the plug-in environment file.

In the above described workflow system, the data includes image data, and the operation node is an image processing apparatus capable of implementing the plurality of data processes.

In the above described example embodiments, a workflow management method for a workflow system, including an operation node and a utility node connected with each other via a network, is devised. The operation node is capable of implementing a plurality of data processes consecutively. The utility node is capable of updating processing at the operation node and implementing the workflow management method. The workflow management method includes the steps of receiving an updating notice of workflow definition used for implementing the plurality of data processes consecutively via a network; obtaining a remote environment file storing a plug-in program retained by an operation node which is a to-be-updated node; generating a plug-in environment file including a plug-in identification value of a plug-in program that needs to be updated, which is retained by the information processing apparatus; generating a difference file including different information between the remote environment file and the plug-in environment file; determining whether to set an install process, an uninstall process, or an operation attribution value for the plug-in program for the operation node based on reading of the difference file; and generating a plug-in setting file including an install path of the plug-in program that needs to be set if the determining step determines to install the plug-in program.

In the above described example embodiments, the workflow management method further includes the step of transmit the plug-in setting file and a resource related to the plug-in setting file to the operation node.

In the above described workflow management method, the difference file includes a plug-in identification value, a difference attribution value, and an operation attribution value, the plug-in identification value designates a plug-in program having different conditions between the remote environment file and the plug-in environment file, the difference attribution value designates a differential condition of the plug-in program having the different conditions between the remote environment file and the plug-in environment file, and the operation attribution value designates one of an enabled condition and a disabled condition for the plug-in program having the different conditions between the remote environment file and the plug-in environment file.

In the above described workflow management method, the data includes image data, and the operation node is an image processing apparatus capable of implementing the plurality of data processes.

In the above-described example embodiments, a computer can be used with a computer-readable program, described by object-oriented programming languages such as C++, Java (registered trademark), JavaScript (registered trademark), Perl, Ruby, to control functional units used for the workflow system. For example, a particular computer (e.g., personal computer, work station) may control an information processing or image processing apparatus using a computer-readable program, which can execute the above-described processes or steps. Further, in the above-described exemplary embodiments, a storage device (or recording medium), which can store computer-readable program, may be a flexible disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card, a memory chip, a mini disk (MD), a magneto optical disc (MO), magnetic tape, hard disk in a server, or the like, but not limited these. Further, a computer-readable program can be downloaded to a particular computer (e.g., personal computer) via a network such as the internet, or a computer-readable program can be installed to a particular computer from the above-mentioned storage device, by which the particular computer may be used for the system or apparatus according to exemplary embodiments, for example.

As above described, the above described information processing apparatus, information processing system, or information processing method can be employed in a workflow system, and a workflow management method, and a program for such workflow management method can be stored in an storage medium.

Additionally, in all of the above-mentioned embodiments, the plug-in environment updating process can be conducted for a specific operation node, a number of selected operation nodes, a plurality of operation nodes or all of the operation nodes.

Numerous additional modifications and variations are possible in light of the above teachings. For example, elements and/or features of different examples and illustrative embodiments may be combined each other and/or substituted for each other.

## Claims

1. An information processing apparatus, connected to a network, that implements a plurality of data processes consecutively, the information processing apparatus comprising:
a remote environment file obtaining unit configured to receive an updating notice of workflow definition used for implementing the plurality of data processes consecutively via the network, and configured to obtain a remote environment file (510) storing a plug-in program retained by an operation node (150, 160, 170) in the network, which is a to-be-updated node;
a plug-in environment file generating unit configured to generate a plug-in environment file (500) including a plug-in identification value of a plug-in program to be updated, the plug-in environment file (500) retained by the information processing apparatus;
a difference file generating unit configured to generate a difference file (520) including different information between the remote environment file (510) and the plug-in environment file (500);
a determining unit configured to read the difference file to determine whether to set an install process, an uninstall process, or an operation attribution value for the plug-in program for the operation node (150, 160, 170); and
a plug-in setting file generating unit configured to generate a plug-in setting file (600) including an install path of the plug-in program to install the plug-in program if the determining unit determines to install the plug-in program.

2. The information processing apparatus of claim 1, wherein the difference file(520) includes a plug-in identification value, a difference attribution value, and an operation attribution value, the plug-in identification value designates a plug-in program having different conditions between the remote environment file (510) and the plug-in environment file (500), the difference attribution value designates a differential condition of the plug-in program having the different conditions between the remote environment file (510) and the plug-in environment file (500), and the operation attribution value designates one of an enabled condition and a disabled condition for the plug-in program having the different conditions between the remote environment file (510) and the plug-in environment file (500).

3. The information processing apparatus of claim 1, further comprising a transmitting unit configured to transmit the plug-in setting file (600) and a resource related to the plug-in setting file (600) to the operation node (150, 160, 170).

4. The information processing apparatus of claim 1, wherein the data includes image data, and the information processing apparatus is an image processing apparatus capable of implementing the plurality of data processes.

5. A workflow system to implement a plurality of data processes consecutively via a network, the workflow system comprising:
an operation node (150, 160, 170) configured to implement the plurality of data processes consecutively; and
a utility node (110) configured to update a process to be implemented by the operation node (150, 160, 170), the utility node (110) including:
a remote environment file obtaining unit configured to receive an updating notice of workflow definition used for implementing the plurality of data processes consecutively via a network, and configured to obtain a remote environment file (510) storing a plug-in program retained by the operation node (150, 160, 170);
a plug-in environment file generating unit configured to generate a plug-in environment file (500) including a plug-in identification value of a plug-in program to be updated, the plug-in environment file (500) retained by the information processing apparatus;
a difference file generating unit configured to generate a difference file (520) including different information between the remote environment file (510) and the plug-in environment file (500);
a determining unit configured to read the difference file (520) to determine whether to set an install process, an uninstall process, or an operation attribution value for the plug-in program for the operation node (150, 160, 170);
a plug-in setting file generating unit configured to generate a plug-in setting file (600) including an install path of the plug-in program to install the plug-in program if the determining unit determines to install the plug-in program; and
a transmitting unit configured to transmit the plug-in setting file (600) and a resource related to the plug-in setting file (600) to the operation node (150, 160, 170),
wherein the difference file (520) includes a plug-in identification value, a difference attribution value, and an operation attribution value,
the plug-in identification value designates a plug-in program having different conditions between the remote environment file (510) and the plug-in environment file (500),
the difference attribution value designates a differential condition of the plug-in program having the different conditions between the remote environment file (510) and the plug-in environment file (500), and
the operation attribution value designates one of an enabled condition and a disabled condition for the plug-in program having the different conditions between the remote environment file (510) and the plug-in environment file (500).

6. A workflow management method for a workflow system including an operation node (150, 160, 170) and a utility node (110) connected with each other via a network, the operation node (150, 160, 170) being capable of implementing a plurality of data processes consecutively, the utility node (110) being capable of updating processing at the operation node (150, 160, 170) and implementing the workflow management method,
the workflow management method comprising the steps of:
receiving an updating notice of workflow definition used for implementing the plurality of data processes consecutively via a network;
obtaining a remote environment file (510) storing a plug-in program retained by an operation node (150, 160, 170) which is a to-be-updated node;
generating a plug-in environment file (500) including a plug-in identification value of a plug-in program that needs to be updated, which is retained by the information processing apparatus;
generating a difference file (520) including different information between the remote environment file (510) and the plug-in environment file (500);
determining whether to set an install process, an uninstall process, or an operation attribution value for the plug-in program for the operation node (150, 160, 170) based on reading of the difference file (520); and
generating a plug-in setting file including an install path of the plug-in program that needs to be set if the determining step determines to install the plug-in program.
